# EUROPEAN PATENT SPECIFICATION

(11) **EP 0 507 022 B1**
(45) Date of publication and mention of the grant of the patent: **10.01.2001**
(21) Application number: 91303027.6
(22) Date of filing: 05.04.1991
(51) Int. Cl.: H04L 12/56

(54) **Method and apparatus for identifying valid cells in a redundant path combining unit of an asynchronous transfer mode switch**
Verfahren und Vorrichtung zur Identifizierung gültiger Zellen in einer Einheit zur Zusammenfügung redundanter Wege eines asynchronen Transfermoduskoppelfelds
Procédé et dispositif d'identification de cellules valables dans une unité de combinaison de voies redondantes d'un commutateur à mode de transfert asynchrone

(43) Date of publication of application: 07.10.1992
(73) Proprietor: MARCONI COMMUNICATIONS LIMITED, Coventry, CV3 1HJ (GB)
(72) Inventor: Hall, Robert Mark, Southampton, Hants (GB)
(74) Representative: Branfield, Henry Anthony

(56) References cited:
- EP-A- 0 384 936

## Description

The present invention relates to a method and apparatus for identifying valid cells in a redundant path combining unit of an asynchronous transfer mode switch having duplicated switching planes.

In a known type of validity checking apparatus the redundant path combining unit is arranged to look at a sequence number attached to each data cell, to detect whether the sequence number matches that stored in a RAM or is greater by one. If either of these conditions are satisfied the cell is considered valid and the sequence number is incremented.

A method for identifying valid data cells comprising a call in a redundant path combining unit of an asynchronous transfer mode switch having duplicated switching planes, is described in Patent No. EP 0 384 936.

A disadvantage of this form of validity checking is that if the same two consecutive cells are lost from both planes, the redundant path combining unit would not allow any cells through until the sequence had cycled round. For a 64 cell sequence it follows:-

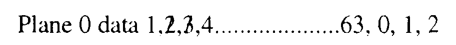

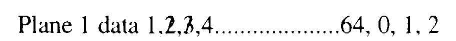

If cells 2 and 3, for example, are lost in both planes, then the following cells 4, 5, 6 ....... 63, 0, 1 are rejected in the cycle resulting in a total loss of 64 cells. This results in the needless prolongation of the original cell-loss error condition.

An object of the present invention is to provide a method for identifying valid data cells comprising a call in a redundant path combining unit of an asynchronous transfer mode switch having duplicated switching planes, the method characterised in the steps of:-
a) identifying the plane from which came the last accepted cell to be passed in respect of a particular call,
b) checking that a sequence number associated with the current cell received is not greater by one than that for the last accepted cell which has been stored in a storage means,
c) checking that the last accepted cell to be passed on the particular call was from the same plane as the current cell,
d) checking if the current cell is a duplicate of the last accepted cell to arrive on this plane, and,
e) passing the current cell to an output store if c) is true and d) is not true and storing in the storage means the sequence number of the current cell.

According to the present invention there is further provided apparatus for executing the method claimed in Claim 1, comprising transceiver means arranged to receive and transmit data, a first store (1) connected to the transceiver means and, arranged to store plane identification data and cell sequence number data, a second store (2) arranged to store a call identifier (VCI) used to address the first store and a sequence number related to a particular cell, for presentation to an addressed location in the first store, first comparator (4), arranged to receive the sequence number from the second store (2) and a sequence number together with plane identification data (PI) from the first store (1) and compare said sequence numbers, a second comparator (5) arranged to receive the sequence number from the second store (2), and the sequence number together with plane identification data (PI) from the first store (1) wherein the second comparator is arranged to receive the sequence number from the first store (1) by way of an incrementer (6) which is arranged to increment the sequence number by one, and compare said sequence numbers;
means for identifying a switching plane from which came the last accepted cell to be passed in respect of a particular call and for identifying a switching plane from which came the current cell,
means for providing a check signal when the current cell to be passed on the particular call was from the same plane as the last accepted cell and is not a duplicate thereof; and
cell acceptance logic circuitry (3) connected to the first and second comparators (4, 5) and arranged to generate read control signals for the first store (1), in accordance with output signals, generated by the first and second comparators (4, 5) and to generate write control signals for the first store (1) in accordance with output signals generated by the first and second comparators (4, 5) and a check signal generated by the means for providing same.

An embodiment of the present invention will now be described with reference to the accompanying drawings in which:-
Figure 1 shows part of an asynchronous time mode switch incorporating duplicated switching planes, and,
Figure 2 shows part of the hardware incorporated in the redundant path combining unit necessary for executing the method.

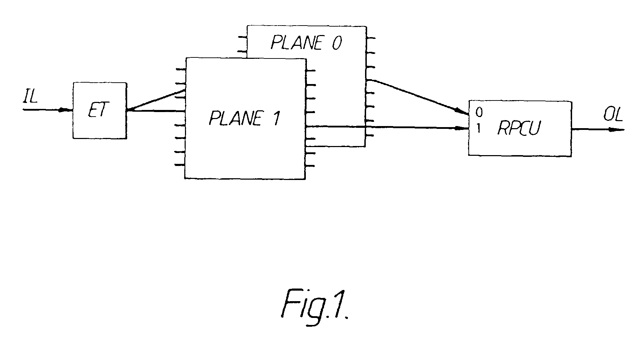

Referring to Figure 1, an exchange termination unit ET has each incoming line IL, connected to it. The data cells pertaining to a call, received on the line IL are passed to both switching planes P0 and P1 and are then switched to an output of the respective plane and passed to a redundant path combining unit RPCU. The redundant path combining unit RPCU received therefore, a duplicate of each cell and it is arranged to decide whether the cells received from plane 0, P0 of plane 1, P1 should be passed to an outgoing line OL or discarded as a duplicate.

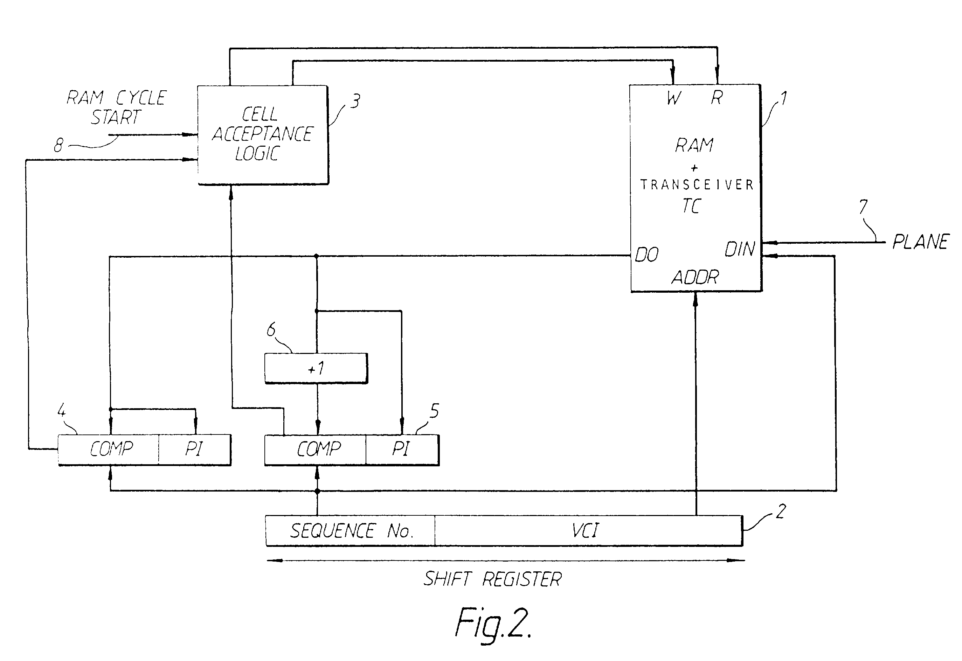

The redundant path combining unit RPCU achieves this by performing an algorithm. Each cell has an associated sequence number, enabling duplicate cells to be identified. The redundant path combining unit RPCU contains a look-up RAM 1 as shown in Figure 2, in which the sequence number is stored for each cell at an address which is identified by a virtual channel indicator VCI which is used to identify the call. The VCI and sequence number are temporarily stored in a shift register 2. The VCI is used to address the RAM 1, and the next sequence number together with a plane identifier P1 from which the last cell was accepted is written into the RAM under the control of cell acceptance logic circuitry 3. The sequence number is applied to first and second comparators 4, 5 which also receive from the RAM 1, the expected sequence number stored for the VCI indicator, and the plane identifier, P1.

The sequence number applied to the comparator 5 from the RAM 1, is incremented by one by circuit 6. The output signals from the comparators 4, 5 are applied to the cell acceptance logic circuitry 3 for controlling the read/write operation of the RAM 1.

The plane identifier P1 is applied to the RAM 1 over line 7. The cell acceptance logic 3 also receives a RAM cycle start signal over line 8. The RAM 1 has data written to it, and read from it by a transceiver, TC and is controlled by a microprocessor.

An example of how cells could arrive at the redundant path combining unit RPCU is as follows:-

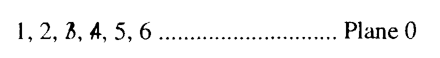

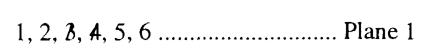

The above represents the cell sequence for plane 0 and plane 1. Assuming that the cells shown crossed do not arrive at the redundant path combining unit RPCU because they are lost due to faults or errors, and cells 1 and 2 of plane 0 are accepted, cell 5 is valid but is out of sequence because the redundant path combining unit is expecting the sequence number of cell 3. Cells 1 and 2 of plane 2 are rejected as they would be duplicates of cells 1 and 2 accepted on the plane 0.

The circuitry described above executes the following algorithm. The algorithm notes the plane from which came the last cell to be passed in respect of the particular VCI. If the cell arrives from e.g. plane 0 and the sequence number is not one greater than that held in the RAM 1, and two further checks are made as follows:-
1) Was the last cell to be passed on this VCI from this plane?
2) Is this cell a duplicate of the cell to arrive on this plane?
This can be detected as the sequence number of this cell being the same as that stored in the RAM 1.

If 1 is true and 2 is not true, then the cell is passed to an output FIFO in the transceiver and the sequence number stored in the RAM 1, is the sequence number of this cell.

The redundant path combining unit RPCU accepts a cell if the sequence number is the next in the sequence. The sequence number written back to the RAM 1 is that of the accepted cell.

The algorithm is shown below in pseudo code:-
: = representing an assignment
= represents a comparison for equality
<> represents a comparison for inequality

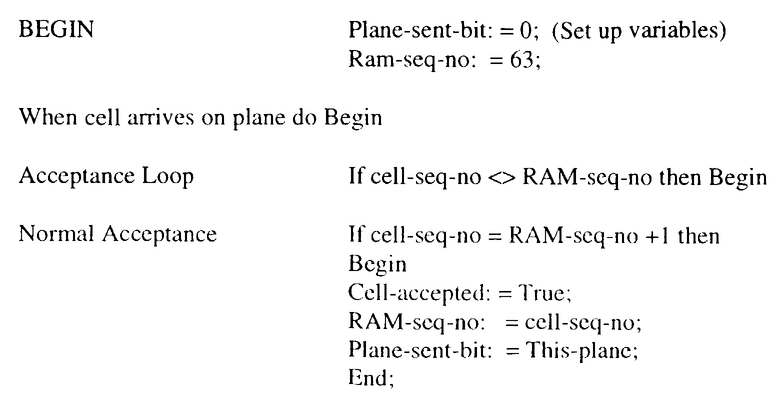

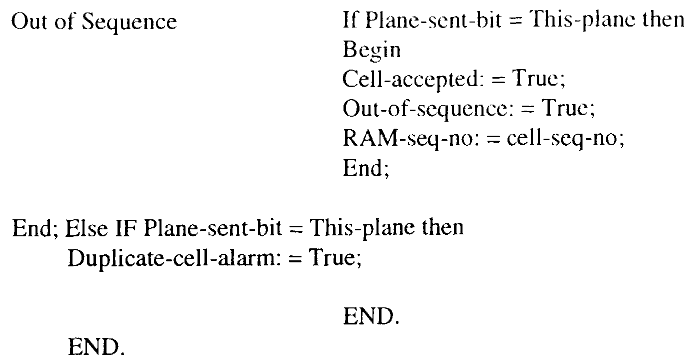

- Variables: cell-seq-no: The sequence number of this incoming cell.
- RAM-seq-no: The sequence number held in RAM for this VCI.
- Plane-sent-bit: The Plane from which the last cell on this VCI was accepted.
- This-plane: The plane that this cell has come from (0 or 1).
- Cell-accepted: Control variable to say whether this cell is passed to the output FIFO.
- Duplicate-cell-alarm: Indication to microprocessor that a cell which is duplicate of the last cell on this call on this plane has arrived.
- Out-of-sequence: Indication to microprocessor that cells have been lost i.e. that cell sent out of sequence.

The algorithm does not cause a modulo 64 sequence loss to occur due to the situation described above with respect to the prior art, and the performance in other situations is equal to that of previously used algorithms.

## Claims

1. A method for identifying valid data cells comprising a call in a redundant path combining unit of an asynchronous transfer mode switch having duplicated switching planes, the method characterised in the steps of:-
a) identifying the plane from which came the last accepted cell to be passed in respect of a particular call,
b) checking that a sequence number associated with the current cell received is not greater by one than that for the last accepted cell which has been stored in a storage means (2),
c) checking that the last accepted cell to be passed on the particular call was from the same plane as the current cell,
d) checking if the current cell is a duplicate of the last accepted cell to arrive on this plane, and,
e) passing the current cell to an output store (1) if c) is true and d) is not true and storing in the storage means (2) the sequence number of the current cell.

2. Apparatus for executing the method claimed in Claim 1, comprising transceiver means arranged to receive and transmit data, a first store (1) connected to the transceiver means and, arranged to store plane identification data and cell sequence number data, a second store (2) arranged to store a call identifier (VCI) used to address the first store and a sequence number related to a particular cell, for presentation to an addressed location in the first store, first comparator (4), arranged to receive the sequence number from the second store (2) and a sequence number from the first store (1) and compare said sequence numbers, a second comparator (5) arranged to receive the sequence number from the second store (2), and the sequence number from the first store (1) by way of an incrementer (6) which is arranged to increment the sequence number by one, and compare said sequence numbers;
means for identifying a switching plane from which came the last accepted cell to be passed in respect of a particular call and for identifying a switching plane from which came the current cell,
means for providing a check signal when the current cell to be passed on the particular call was from the same plane as the last accepted cell and is not a duplicate thereof; and
cell acceptance logic circuitry (3) connected to the first and second comparators (4, 5) and arranged to generate read control signals for the first store (1), in accordance with output signals generated by the first and second comparators (4, 5) and to generate write control signals for the first store (1) in accordance with output signals generated by the first and second comparators (4, 5) and a check signal generated by the means for providing same.

## Patentansprüche

1. Verfahren zur Identifizierung gültiger Datenzellen im Zusammenhang mit einem Anruf in einer Einheit zur Zusammenfügung redundanter Wege eines asynchronen Transfermoduskoppelfelds mit doppeltem Verteilerfeld, wobei die Methode gekennzeichnet ist durch die Schritte:
a) identifizieren des Felds aus dem die letzte zum Durchlassen akzeptierte Zelle bezüglich eines bestimmten Anrufs kam,
b) prüfen, dass die zu der aktuellen Zelle gehörende Sequenznummer nicht um eins größer ist als die der letzten akzeptierten Zelle, die in einem Speichermedium (2) gespeichert ist,
c) prüfen, ob die letzte zur Übertragung akzeptierte Zelle für diesen bestimmten Anruf aus dem selben Feld kam wie die aktuelle Zelle,
d) prüfen, ob die aktuelle Zelle ein Duplikat der zuletzt akzeptierten auf diesem Feld ankommenden Zelle ist,
e) übertragen der aktuellen Zelle in einen Ausgangsspeicher (1) falls c) wahr ist und d) unwahr ist, und speichern der Sequenznummer der aktuellen Zelle in dem Speichermedium (2).

2. Vorrichtung zur Durchführung des Verfahrens nach Anspruch 1, aufweisend einen Transceiver zum Empfang und zur Übertragung von Daten, einen ersten Speicher (1), der mit dem Transceiver verbunden und dazu eingerichtet ist, Daten zur Feldidentifikation und Zellsequenznummern zu speichern, einen zweiten Speicher (2), der dazu eingerichtet ist, einen zur Adressierung des ersten Speichers verwendeten Anrufidentifier (VCI) und eine zu einer bestimmten Zelle gehörende Sequenznummer für die Übergabe an eine adressierte Stelle in dem ersten Speicher zu speichern, eine erste Vergleichseinrichtung (4), die eingerichtet ist, die Sequenznummer aus dem zweiten Speicher (2) und eine Sequenznummer zusammen mit Daten zur Feldidentifikation (PI) aus dem ersten Speicher (1) zu empfangen und die Sequenznummern zu vergleichen, eine zweite Vergleichseinrichtung (5), die eingerichtet ist zum Empfangen der Sequenznummer aus dem zweiten Speicher (2) und der Sequenznummer zusammen mit den Daten zur Feldidentifikation (PI) aus dem ersten Speicher (1) über einen Inkrementierer (6), der dazu eingerichtet ist, die Sequenznummer um eins zu erhöhen, und diese Sequenznummern zu vergleichen;
Einrichtungen zur Identifikation des Feldes, von dem die zuletzt zur Übertragung akzeptierte Zelle bezüglich eines bestimmten Anrufs kam, und zur Identifikation des Feldes von dem die aktuelle Zelle kam,
Einrichtungen zur Bereitstellung eines Prüfsignals wenn die aktuelle zu übertragende Zelle aus dem selben Feld kam wie die letzte akzeptierte Zelle und keine Kopie von dieser ist; und
Schaltungen mit Logik zum Akzeptieren von Zellen (3), die mit der ersten und der zweiten Vergleichseinrichtung (4, 5) verbunden und dazu eingerichtet sind, Signale zur Lesesteuerung für den ersten Speicher (1) gemäß Ausgangssignalen, die von der ersten und der zweiten Vergleichseinrichtung (4, 5) stammen, zu erzeugen und Signale zur Schreibsteuerung für den ersten Speicher (1) gemäß Ausgangssignalen, die von der ersten und der zweiten Vergleichseinrichtung (4, 5) stammen und Prüfsignalen die von der Einrichtung zur Erzeugung derselben stammen, zu erzeugen.

## Revendications

1. Procédé pour identifier des cellules de données valides comportant un appel dans une unité de combinaison de trajets redondants d'un commutateur à mode de transfert asynchrone ayant des plans de commutation dupliqués, le procédé étant caractérisé par les étapes consistant à :
a) identifier le plan à partir duquel provient la dernière cellule acceptée à faire passer par rapport à un appel particulier,
b) contrôler qu'un numéro de séquence associé à la cellule courante reçue n'est pas supérieur de un à celui de la dernière cellule acceptée qui a été mémorisée dans des moyens de mémorisation (2),
c) contrôler que la dernière cellule acceptée à faire passer sur l'appel particulier provenait du même plan que la cellule courante,
d) contrôler si la cellule courante est une copie de la dernière cellule acceptée pour arriver sur ce plan, et
e) faire passer la cellule courante dans une mémoire de sortie (1) si c) est vrai et d) n'est pas vrai et mémoriser dans les moyens de mémorisation (2) le numéro de séquence de la cellule courante.

2. Dispositif pour exécuter le procédé selon la revendication 1, comportant des moyens transcepteurs conçus pour recevoir et émettre des données, une première mémoire (1) reliée aux moyens transcepteurs et, conçue pour mémoriser des données d'identification de plan et des données de numéro de séquence de cellule, une seconde mémoire (2) conçue pour mémoriser un identificateur d'appel (VCI) utilisé pour adresser la première mémoire et un numéro de séquence associé à une cellule particulière, pour une présentation à un emplacement adressé dans la première mémoire, un premier comparateur (4) conçu pour recevoir le numéro de séquence provenant de la seconde mémoire (2) et un numéro de séquence provenant de la première mémoire (1) et comparer lesdits numéro de séquence, un second comparateur (5) conçu pour recevoir le numéro de séquence provenant de la seconde mémoire (2) et le numéro de séquence provenant de la première mémoire (1) par l'intermédiaire d'un dispositif d'incrémentation (6) qui est conçu pour incrémenter de un le numéro de séquence, et comparer lesdits numéros de séquence,
des moyens pour identifier un plan de commutation à partir duquel provient la dernière cellule acceptée à faire passer par rapport à un appel particulier et pour identifier un plan de commutation à partir duquel provient la cellule courante,
des moyens pour délivrer un signal de contrôle lorsque la cellule courante à faire passer sur l'appel particulier provenait du même plan que la dernière cellule acceptée et n'est pas une copie de celle-ci, et
un circuit logique d'acceptation de cellule (3) relié aux premier et second comparateurs (4, 5) et conçu pour générer des signaux de commande de lecture pour la première mémoire (1), conformément à des signaux de sortie générés par les premier et second comparateurs (4, 5) et pour générer des signaux de commande d'écriture pour la première mémoire (1) conformément à des signaux de sortie générés par les premier et second comparateurs (4, 5) et à un signal de contrôle généré par les moyens destinés à délivrer celui-ci.
